Europäisches Patentamt

European Patent Office

Office européen des brevets

(11) Publication number: **0 228 805**
**B1**

(12) **EUROPEAN PATENT SPECIFICATION**

(45) Date of publication of patent specification: **08.08.90**

(21) Application number: **86309120.3**

(22) Date of filing: **21.11.86**

(51) Int. Cl.⁵: **B 65 G 13/11**

(54) Undriven gravity roller conveyor.

(30) Priority: **22.11.85 US 800973**

(43) Date of publication of application:
**15.07.87 Bulletin 87/29**

(45) Publication of the grant of the patent:
**08.08.90 Bulletin 90/32**

(84) Designated Contracting States:
**AT BE CH DE ES FR GB GR IT LI NL SE**

(56) References cited:
**DE-A-2 105 284**
**GB-A- 15 899**
**GB-A-1 197 665**
**GB-A-2 023 084**
**US-A-4 379 503**

**Aumund/Mechtold:- Hebe- und Förderanlagen,**
**seite 98**

(73) Proprietor: **KORNYLAK CORPORATION**
**400 Heaton Street**
**Hamilton, OH 45011 (US)**

(72) Inventor: **Kornylak, Andrew T.**
**325 North C Street**
**Hamilton Ohio 45013 (US)**

(74) Representative: **Purvis, William Michael**
**Cameron et al**
**D. Young & Co. 10 Staple Inn**
**London WC1V 7RD (GB)**

Courier Press, Leamington Spa, England.

# Description

The invention relates to undriven gravity roller conveyors.

Currently available gravity roller conveyors typically use a pair of structural members to support each row of load-bearing rollers. Such a structure necessitates tedious fabrication techniques to ensure uniform spacing between all of the structural members throughout the length of the conveyor. It is often desirable in such systems to stagger the placement of successive rollers to reduce the gap over which a load is unsupported. Typically, the staggering is achieved merely by adding one or more additional rows of rollers with their centres longitudinally offset from one another. Recent conveyor designs have incorporated rollers mounted on alternate sides between pairs of support structures; however, the need to accommodate the axles of successive rollers has restricted the ability of such designs to minimize the gap between successive rollers. To date, the only conveyor systems providing minimal gap between successive rollers require an excessive number of structural supporting members. Such designs exacerbate the fabrication difficulties of maintaining proper spacing betweenthe structural supporting members.

To avoid the use of ballbearing type journals between the axles of conveyor rollers and the structural supporting members, some designs have used specially machined configurations of axles for retentively engaging apertures in the structural support members with various types of flanges, bushings and retainers. Other designs have used sleeve-type ball bearing assemblies interposed between the axles of the rollers and specially formed receptacles in the supporting structural members. Unique axles and specially formed receptacles both incur additional tooling and fabrication costs. Moreover, the often intricate interrelation between the specially formed receptacles and the unique axles or bearings tends to hinder the repair or replacement of damaged rollers, thereby unnecessarily increasing the maintenance cost of such conveyor systems.

Patent Specification GB—A—1197665, which corresponds to the preamble of claim 1, discloses a conveyor formed by channel shaped members disposed in parallel and having pairs of side walls connected by base walls with slots in the free edges of the side walls, which slots receive axles of rollers thereby mounting the rollers in the channel members with their upper surfaces forming a conveying plane.

According to the invention there is provided an undriven gravity roller conveyor, comprising:

a section providing a base and a plurality of discrete elongate channel members extending from the base in laterally spaced apart, parallel relation forming a plurality of rows, each of the channel members having integral therewith a plurality of opposite side walls extending longitudinally of the rows and a base wall rigidly joining and maintaining the opposite side walls in a fixed spaced apart relation and each of the opposite side walls having a plurality of slots formed in a free edge thereof and receive rollers mounted on axles,

characterized in that the separation between the opposite side walls is equal to the separation between neighbouring channel members;

the slots of the plurality of slots formed in the opposite side walls are aligned in parallel columns with corresponding slots in opposite side walls of neighbouring channel members, the parallel columns are substantially perpendicular to the longitudinal extent of the rows, the slots are open and spaced along a free edge of each of the opposite side walls of each of the channel members with the spacing between successive ones of the slots being less than one half the diameter of the rollers within the section;

the axles are disposed within the slots, both between the plurality of the opposite side walls of the channel members and between adjacent side walls of neighbouring pairs of the channel members; and

the axles of the rollers in any two neighbouring rows are disposable in different ones of the columns, whereby the separation between the axles of the rollers in any two neighbouring rows can be less than one-half of the exterior diameter of the rollers.

By reducing the number of structural members it is possible to reduce fabrication costs yet still fabricate the conveyor to precise tolerances.

In such a conveyor it can be possible rapidly to replace the load-bearing rollers and the load-bearing rollers can be readily interchanged particularly to change the spacing patterns between the load-bearing rollers.

Very close spacing is obtainable between the load-bearing rollers and it is possible to accommodate movement of cargo borne in containers which have supporting surfaces of narrow width engaging the load-bearing rollers of the conveyor. The conveyor can have inexpensive load-bearing rollers exhibiting low friction characteristics.

Such features as the depths, widths or spacings between successive slots may be varied, either separately or in combination, along the length of the channel members to accept different sizes or arrangements of rollers at specific locations and thereby accommodate variations in cargo loading experienced at those locations.

The invention is diagrammatically illustrated by way of an example with reference to the accompanying drawings, in which:

Figure 1 is a perspective view of an embodiment of an undriven gravity roller conveyor according to the invention;

Figure 2 is a plan view of the conveyor of Figure 1;

Figures 3A and 3B are side cross-sectional views taken respectively on lines IIIA—IIIA' and IIIB—IIIB' in Figure 2;

Figure 4 is an end cross-sectional view taken on line IV-IV' in Figure 2;

Figure 5 is an exploded perspective view showing one type of roller assembly incorporated in the conveyor shown in Figure 1;

Figures 6A, 6B and 6C, are respectively front and end views of a sleeve usable in the roller assembly shown in Figure 5 and an end view of an alternative sleeve of the roller assembly of Figure 5;

Figure 7 is a partial side view of a slot configuration in a channel member of an alternative embodiment to that of Figure 1;

Figure 8 is an isometric view of an alternative embodiment of a roller to that of Figure 5;

Figure 9 is an end cross-sectional view of an alternative embodiment of an undriven gravity roller according to the invention;

Figure 10 is a top view of an alternate embodiment of a conveyor of the kind shown in Figure 1; and

Figure 11 is a side cross-sectional view of an alternate embodiment of a conveyor.

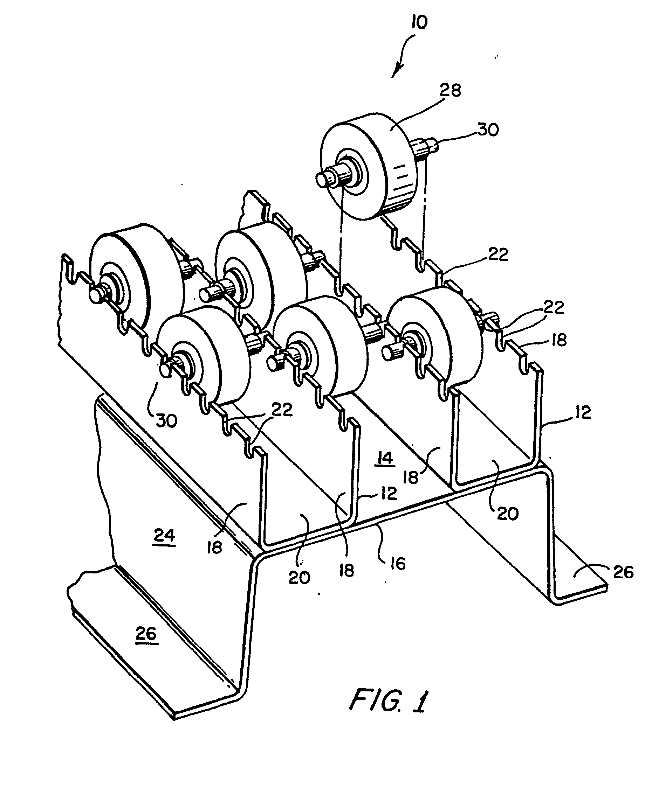

Referring to the drawings, Figure 1 shows a section 10 of a multi-track undriven gravity-type conveyor which is constructed with a pair of elongate channel members 12 of any desired length affixed in a spaced apart, parallel relation to the outer surface of a web 14 of a base structure 16. Each channel member 12 has a pair of opposite side walls 18 extending in parallel along the length of the section 10. Connecting base walls 20 rigidly join and maintain the opposite side walls 18 in fixed, spaced apart relation.

A plurality of open slots 22 are formed spaced in the free upper edge of each side wall 18. The slots 22 are substantially identical and equidistantly spaced along the free upper edge of each side wall 18. The slots 22 are aligned in parallel columns which are substantially perpendicular to the length of the multi-track section 10.

The base structure 16 is constructed to a top hat section with a pair of substantially parallel flange walls 24 disposed along opposite sides of the web 14 and extending downwardly away from the base walls 20 of the channel members 12. The lower edges of the flange walls 24 are bent at right angles to the surfaces of the flange walls 24 to form a pair of feet flanges 26. The disposition of the flange walls 24 and the feet flanges 26 extending in an opposite direction from the side walls 18 endows the multi-track section 10 with enhanced rigidity, thereby enabling a conveyor in which the section 10 is incorporated to handle heavy cargo loads.

A plurality of rollers 28, having opposite end portions of their axles 30 extending from opposite sides thereof, are disposed in rows both between the opposite side walls 18 of each channel member 12 and between the adjacent side walls 18 of the two neighbouring channel members 12. The end portions of the axles 30 are disposed in aligned pairs of the slots 22, thereby forming three rows of staggered rollers 28, with each row extending over substantially the entire length of the multi-track section 10. In this manner, it can be seen that two discrete channel members 12, when spaced apart so that the least distance between their closest side walls 18 is equal to the spacing between the opposite side walls 18 of each channel member, provide three adjacent rows of unconnected rollers for independently supporting a cargo load such as a slat of a pallet.

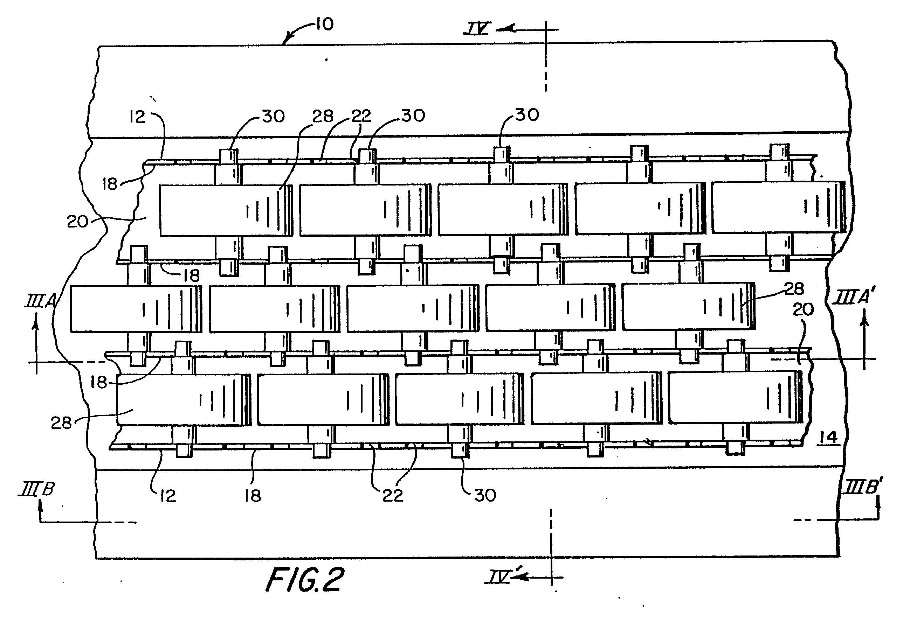

As shown in Figure 2, the arrangement of channel members 12 having the plurality of substantially identical slots 22 aligned in columns perpendicular to the length of the section 10, provides a configuration in which the end portions of the axles 30 are disposed within every third pair of slots along each row formed by an adjacent pair of the side walls 18. This arrangement allows the spacing between rollers in each row to be independently determined and tailored to a particular conveyor application. It may be seen therefore, that three discrete, spaced apart channel members 12 will provide five rows of the load-bearing rollers 28 while four discrete, spaced apart channel members 12 will provide seven rows of the rollers 28. In general, $n$ discrete channel members 12 arranged in parallel with the separation between the side walls of neighbouring channel members being equal to the separation between the opposite side walls of each channel member, and with corresponding slots 22, in at least the closer of the opposite side walls of neighbouring channel members 12, aligned in parallel columns substantially perpendicular to the length of the rows, provide $2n-1$ rows for receiving the load-bearing rollers 28.

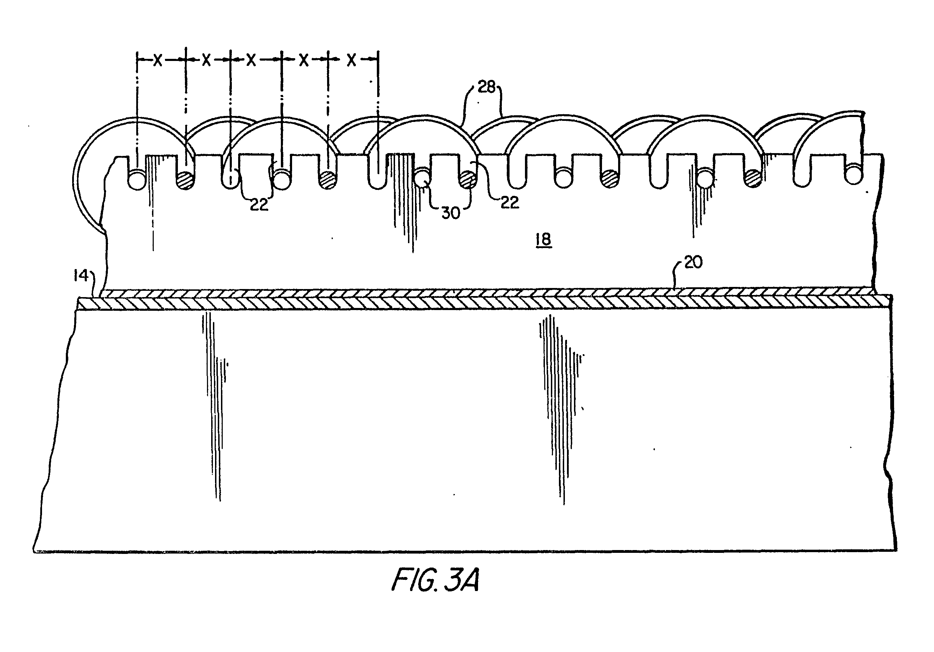

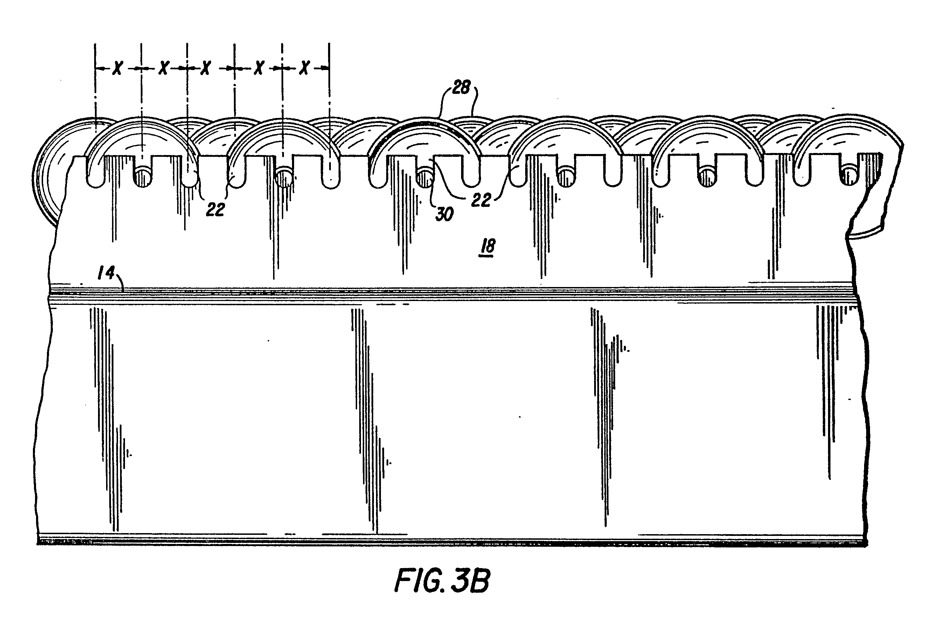

The spacing between the slots 22 is best shown in Figures 3A and 3B which are side cross-sectional views taken on lines IIIA—IIIA' and IIIB—IIIB' respectively in Figure 2. As shown, the end portions of the axles 30 in a row of the rollers 28 are disposed within every third slot along the length of the row. In this arrangement, the centre-to-centre spacing $x$ between successive slots 22 along each free edge of each side wall 18 can be made extremely small. As shown, the centre-to-centre spacing $x$ is substantially less than one-half the exterior diameter of each of the rollers 28. Practical considerations such as the occasional presence of rubbish or debris upon one of the sections 10 during operation of a conveyor makes it advisable for a small clearance to be maintained between each successive pair of rollers in each row. In effect therefore, the multi-track configuration disclosed provides a spacing between successive slots 22 which is substantially equal to the quotient of the sum of the exterior diameter of one of the rollers and the clearance between two successive rollers in the row, divided by the number of rows, $2n-1$.

In a typical configuration, with two channel members, using commercially available standard ball bearing skate wheels having nominal 50 mm (2 inch) exterior diameters, with the skate wheels mounted to provide approximately 0.79 mm (0.03 inches) clearance between successive skate wheels, the sum of the exterior diameter of one skate wheel type roller and the clearance between two successive skate wheel rollers will equal 50 mm (2 inches). This will allow for a 17 mm (0.675 inch) centre-to-centre spacing between successive slots. Alternatively, a 20.3 mm (0.8 inch) spacing between successive slots will accommodate 57 mm (2.25 inch) diameter rollers such as the Palletflo hysteresis wheels. It may be seen therefore, that this configuration accommodates a spacing between slots which is approximately one-third of the exterior diameter of the rollers. The practical advantages of the close spacing provided between successive slots lie in both the ease with which a roller spacing pattern can be changed and in the ability of a conveyor with close spacing between successive rollers to accommodate, due to the staggered alignment of neighbouring rows, movement without tipping, of cargo borne in containers having load-bearing members of narrow width engaging the rollers.

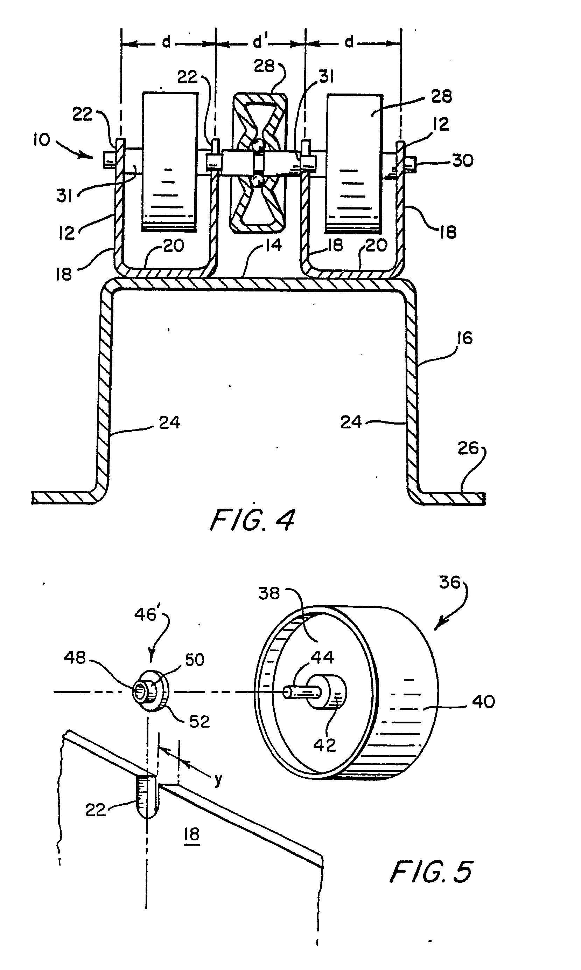

Figure 4 provides a cross-sectional end view taken on line IV—IV' in Figure 2 to show the detailed structural aspects of the section 10. The pair of channel members 12 shown provide four side walls 18 accommodating three parallel rows of rollers 28. As shown, the base walls 20 rigidly join and maintain the opposite side walls 18 in their fixed, spaced-apart relation. The separation, $d'$ between the side walls 18 of the neighbouring channel members 12 is equal to the separation, $d$, between the opposite side walls 28 of each of the channel members 12. The rollers shown may be conventional versions of standard ballbearing skate wheels with the axle 30 pressed through the centre of the wheel assembly. Shoulders 31 formed in the axles 30, inwardly from their end portions, rest against the facing surface of the side walls 28. Alternatively, these standard skate wheel rollers may be replaced with rollers having a solid inner race with projecting journals.

Figure 5 shows an alternative embodiment of roller 36 of less expensive construction. The roller 36 has a circumferential load-carrying surface provided by an element such as a circumferential flange 40 which encircles a disc 38 and forms a load-bearing surface. An axle retaining centre such as a hub 42 is formed at the centre of the roller, coaxially disposed with respect to the load-carrying surface. The disc 38 is a rigid element formed as an integral part of the roller construction or, alternatively, an intermediate portion made of a rigid solid or cellular material can be used to connect the axle retaining centre with the element providing the load-carrying surface. It may be noted that the disc 38 forms a web and may have either a flat or a corrugated cross-sectional shape (and the corrugations may be either radial or unidirectionally oriented). The ends of an axle 44 extend from and axially beyond the hub 42. The rollers may be made of inexpensive material such as ABS plastics, nylon or polypropylene while the axle 44 will generally be made of steel. The axle 44 may be moulded in place or alternatively, press fitted into an axial passage formed through the hub 42 during moulding thereof. It should be noted that a mould for the roller 36 may be fitted with interchangeable core elements to provide different diameters of axial passages through the hub 42 during moulding. This would allow the rollers 36 moulded in the same mould to be provided with different diameter axles 44. A larger diameter axle may be used to provide heavy-duty wheels suitable for use at particular locations (e.g., pallet loading zones) along the conveyor while smaller diameter axles may be used in wheels where low friction properties are desired (in substitution of more expensive ball bearing type rollers). The load-bearing surface of the flange 40 may be either provided by or, alternatively encircled with, an elastomeric material forming, for example, a tyre.

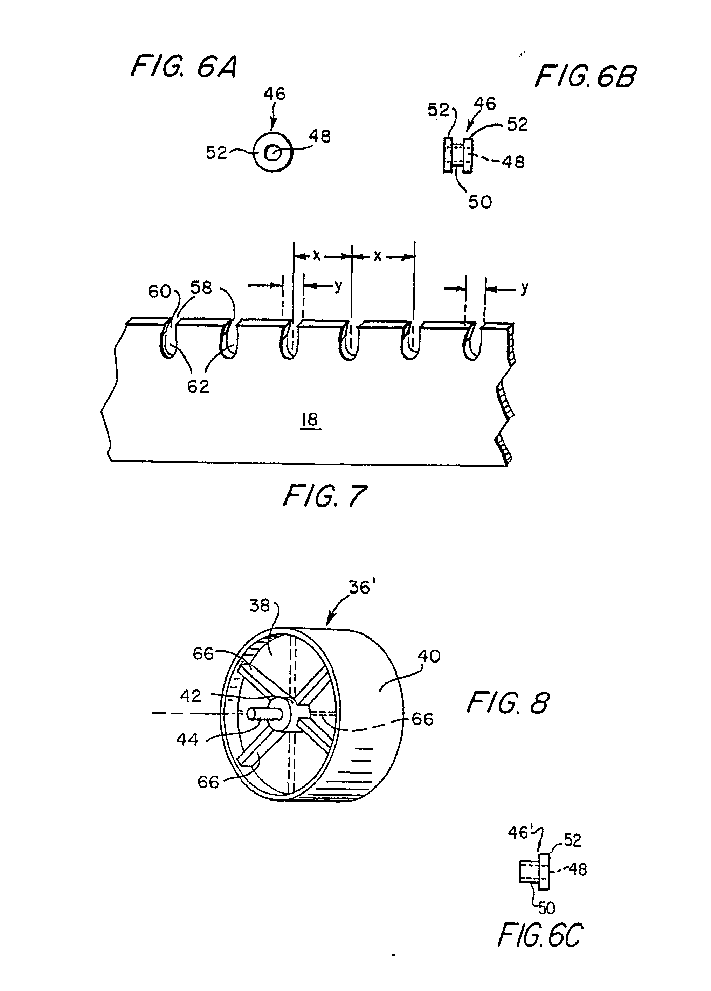

As shown in Figures 5, 6A, 6B and 6C, sleeves 46, 46' having an aperture 48 extending axially therethrough can be placed around the ends of the axles 44 to accommodate rotation of the rollers 36. The sleeves 46, 46' have a tubular portion 50 of lesser diameter and either a single (Figure 6C) or twin flanges (Figures 6A and 6B) 52 of greater diameter projecting from the tubular portion 50. The tubular portion 50 is configured to allow the sleeve 46, 46' to be received within one of the slots 22, and thereby serve as a sleeve bushing providing a low friction accommodation for rotation of the shaft 44 and the roller 36. In one embodiment, the diameter of the tubular portion 50 is greater than the width, $y$ (shown in Figure 5), of the slots 22. Consequently, when the tubular portion 50 of the sleeve 46, 46' is forced into one of the slots 22, the tubular portion is slightly deformed, thereby ensuring that the sleeve 46, 46' will remain within the slot 22 during shipment of the section 10 and its subsequent use to convey moving cargo. It should be noted that the sleeves 46' having only a single flange 52 are cheaper to mould than the sleeves 46 with twin flanges 52. In embodiments using sleeves with a single flange 52, the flanges (on two sleeves used on opposite ends of each axle) are located inside the channel, between the hub 42 and the inside surfaces of the side walls 18.

In the same embodiment of the roller 36, or in an alternative embodiment, the cross-sectional dimension (e.g., the diameter) of the axial bores 48 may be made greater than the diameter of the corresponding axle 44. Consequently, when the diameter of the tubular portion 50 is made slightly larger than the width $y$ of the slot 22, a press or interference fit of the sleeve 46, 46' into a slot not only ensures that the sleeve is held in place, but that the axial bore 48 has a cross-sectional dimension greater than the diameter of the axle 44. This ensures that the cross-sectional dimension of the deformed axial bore 48 is greater than the diameter of the shaft 44, thereby providing a correct, low-friction fit for the axle 44. It should be noted that the innermost flange 52 of each sleeve should have an axial thickness sufficient to serve as a spacer between the corresponding base surface of the hub 42 and the facing surface of the side wall 18 surrounding the slot 22. Proper selection of the thickness of the flange 52 will prevent the axle 44 and the roller 36 from experiencing axial movement between the side walls 18.

Figure 7 shows a segment of a side wall 18 having a plurality of open slots 58 (having an equidistant centre-to-centre spacing $x$) of an alternative configuration formed along its unjoined edge. Each slot 58 has an upper, entry region 60 characterized by a narrower width than a lower, blind retaining region 62 which has a width $y$ which may be smaller than (or, alternatively, approximately equal to) the diameter of the tubular portion 50 of the sleeves 46, 46'. The narrower width of the entry region is formed by having the upper, opposite edges of the slot extended slightly together. This configuration, in which the width of the entry region 60 is smaller than the width $y$, provides deformation of the tubular portion 50 of sleeves 46, 46' during their insertion; however, as the tubular portions 50 are forced beyond the entry regions 60 and into the retaining regions 62, the tubular portions 50 are free to resume their undeformed rest dimensions but restricted, by the narrowness of the entry regions 60, from working upwardly out of the slots 58 during either shipment of the conveyor section 10 or subsequent cargo conveying operations.

There are two options available for forming the entry regions 60; in the first option, a slot 58 may be prepunched as shown in Figure 7 to provide a narrow throat or entry region 60. In the second option, the side member 18 may be formed with the slots 22 as shown in Figures 1 to 5, with parallel walls. Then, after assembly of a conveyor section with the axles positioned in the slots, a narrow throat may be formed at the entry regions, or throats, 60 of each slot by a punch operation in which the entry regions 60 are deformed inwardly with the opposite entry edges of the slots moved slightly together as shown in Figure 7.

Figure 8 shows an alternative roller 36' which may be moulded from an inexpensive material such as nylon, but which is designed to handle heavy cargo masses. In this embodiment, a plurality of webs 66 are moulded on both sides of a central disc 38, and extend radially between the hub 42 and the inner surfaces of the flange 40. It should be noted that the webs on one side of the disc 38 are arcuately shifted and thereby positioned between the webs on the opposite side of the disc 38. The webs 66 serve to strengthen the circumferential flange 40.

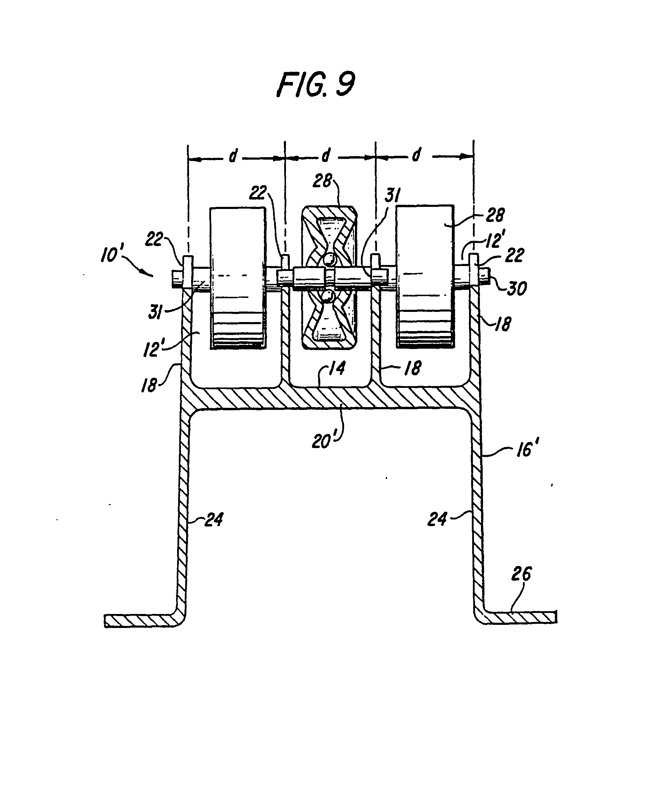

Figure 9 provides a cross-sectional end view to show the detailed structural aspects of an alternative embodiment of a section 10' of multi-track undriven gravity-type conveyor. In this embodiment, channels 12' are formed as integral parts of a base structure 16' as, for example, by extrusion of a material such as aluminum. An equal separa-

tion, $d$ exists between neighbouring side walls 18 defining each channel 12'. A plurality of the open slots 22 are subsequently formed along the unjoined upper edges of each side wall 18 by machining or punching operations. The slots 22 are substantially identical and equidistantly spaced along the upper or unjoined edges of the side walls 18. The slots 22 are aligned in parallel columns which are substantially perpendicular to the length of the multi-track section 10. A base wall 20' joins the flange walls 24 and forms a middle portion of the structure 16' extending between and interconnecting the side walls 18.

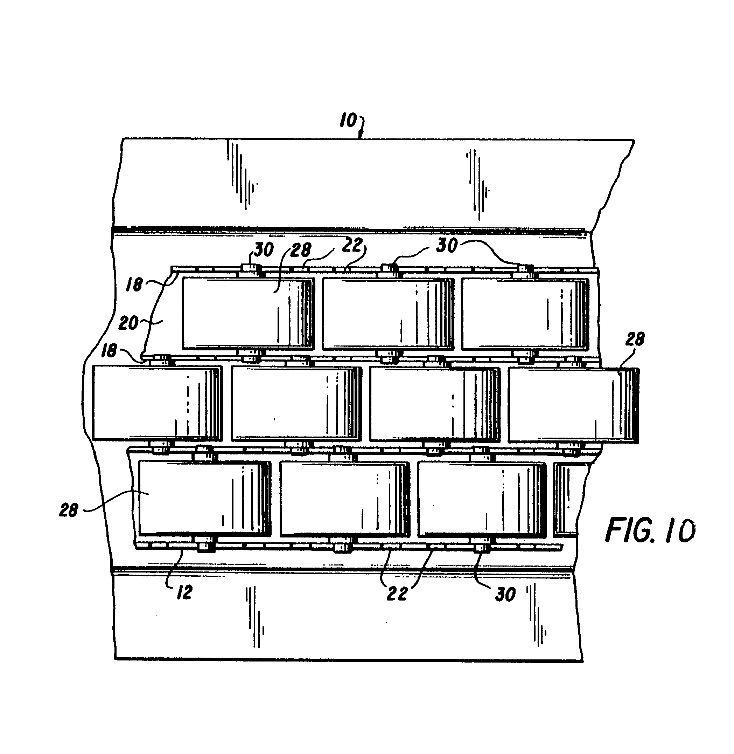

The section 10' is formed with equidistant spacing between the slots 22 along the length of the side walls 18. The end portions of the axles 30 along any row of rollers 28 are disposed within the slots 22 in configurations adopted to particular load-bearing requirements. For example, and as was shown in Figure 2, the end portions of the axles 30 in a row of the rollers 28 may be disposed within every third slot along the length of the row. The centre-to-centre spacing between successive open slots 22 along each side wall 18 can be made extremely small. In a typical embodiment, the centre-to-centre spacing between successive slots 22 is substantially less than one-half of the exterior diameter of each roller 28. Such spacing allows the end portions of the axles 30 in a row of rollers 28 to be disposed within every third slot 22 along the length of a row, whereby the disposition of rollers 28 in the left, centre and right rows as viewed in Figures 9 and 10 provides a staggered alignment of axles 30 between neighbouring rows.

Figure 10 shows an embodiment incorporating close lateral spacing which is attainable simply by incorporating rollers 28 having very wide circumferential load carrying surface. This feature, when combined with the exceptionally close longitudinal spacing attainable between successive rollers in the conveyor disclosed, offers an enhanced ability to carry exceptionally heavy cargo.

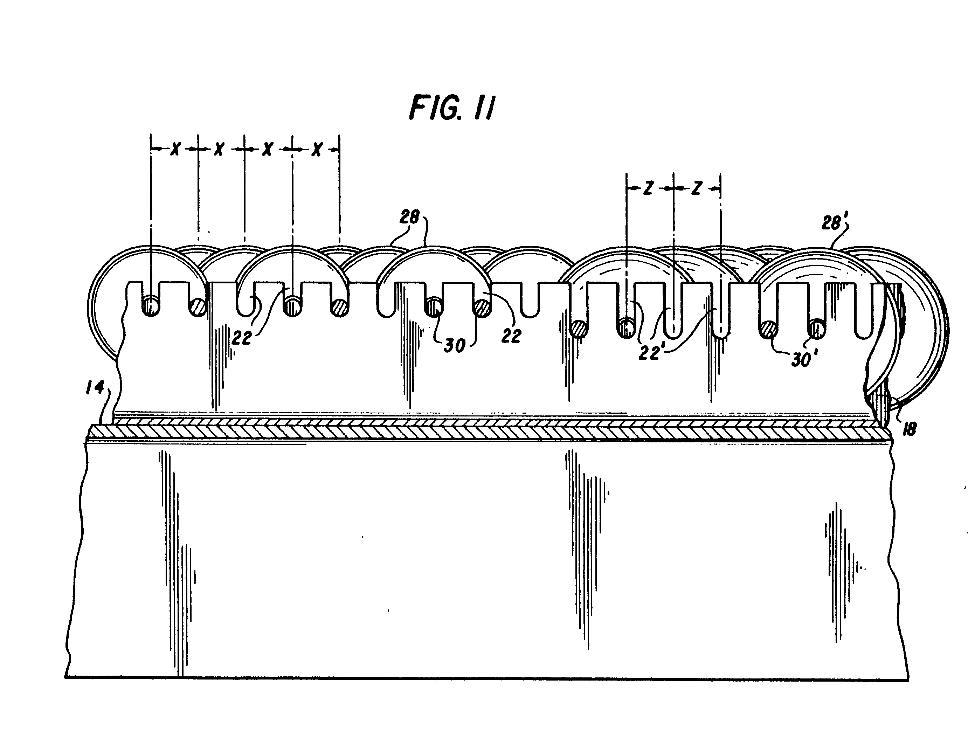

As shown in Figure 11, other embodiments may be constructed with channel elements 18 containing variations in either the depths of the slots 22, 22', the widths of the slots, or the spacings between successive slots, either separately or in combination, along the length of each channel member. In the embodiment shown in Figure 12 for example, three channel members 18 provide for five rows of staggered rollers 28, 28'. The slots 22' along the rightmost portions of the channels 18 shown have substantially greater depth than the depth of the slots 22 shown along the leftmost portions. The greater depth of the slots 22' permits reception of rollers 28' having a greater exterior diameter than the rollers 28 while preserving a common horizontal load line for supporting cargo along a tangent extending between the lesser diameter rollers 28 and the greater diameter rollers 28'. Also, the longitudinal spacing, $z$, between successive slots 22' may be made shorter than the spacing, $x$, between successive slots 22, to ensure a minimal longitudinal gap between the rollers 28' along the rightmost portion. Alternatively, the slots may be made either less deep or spaced farther apart to receive other sizes or configurations of rollers. Also, the widths of some slots may be made different to receive the axles 30 of different diameters. With these variations, the conveyors disclosed may be configured with two or more types or sizes of rollers to accommodate peculiar cargo handling requirements.

It will be apparent that the invention contemplates a multi-track conveyor for movement and live storage of cargo. Through its closer wheel spacing, this conveyor can provide increased load carrying capacity while enabling gravity flow of cargo having narrow load-bearing surfaces. Examples of the types of cargo which may flow over a conveyor constructed according to the principles disclosed herein include pallets with very narrow slats and even pails and drums with bottom chines.

The economy of rail design, for example, two channel members supporting three rows of rollers, can minimize the number of structural components required while alleviating difficulties during fabrication in the alignment of the channel members used. The roller spacing patterns of the resulting conveyor are easy to change, even in the field and without tools. The inexpensive roller disclosed, with its sleeve bushing type bearing, can match the low friction properties of much more expensive ball bearing type rollers. Moreover, the conveyor disclosed can be amenable to interchanging or mixing of rollers of different characteristics. For example, steel skate wheel type rollers or heavy-duty economy rollers may be placed at zones of the conveyor likely to be subjected to impact loads such as loading zones where pallets are often dropped onto a conveyor. Standard economy wheels may be used in the same conveyor at locations intermediate the loading and unloading zones.

## Claims

1. An undriven gravity roller conveyor, comprising:

a section providing a base (16) and a plurality of discrete elongate channel members (12) extending from the base 16) in laterally spaced apart, parallel relation forming a plurality of rows, each of the channel members 12) having integral therewith a plurality of opposite side walls 18) extending longitudinally of the rows and a base wall (20) rigidly joining and maintaining the opposite side walls (18) in a fixed spaced apart relation and each of the opposite side walls having a plurality of slots (22, 58) formed in a free edge thereof and receive rollers (28, 36) mounted on axles (30, 44),

characterized in that the separation between the opposite side walls (18) is equal to the separation between neighbouring channel members (12);

the slots of the plurality of slots (22, 58) formed in the opposite side walls (18) are aligned in parallel columns with corresponding slots (22, 58) in opposite side walls (18) of neighbouring channel members (12), the parallel columns are substantially perpendicular to the longitudinal extent of the rows, the slots (22, 58) are open and spaced along a free edge of each of the opposite side walls (18) of each of the channel members (12) with the spacing between successive ones of the slots being less than one half the diameter of the rollers (28, 36) within the section;

the axles (30, 44) are disposed within the slots (22, 58), both between the plurality of the opposite side walls (18) of the channel members (12) and between adjacent side walls (18) of neighbouring pairs of the channel members (12); and

the axles (30, 44) of the rollers in any two neighbouring rows are disposable in different ones of the columns, whereby the separation between the axles (30, 44) of the rollers (28, 36) in any two neighbouring rows can be less than one-half of the exterior diameter of the rollers (28, 36).

2. An undriven gravity roller conveyor according to claim 1, wherein each of the rollers (28, 36) is mounted on a different one of the axles (30, 44).

3. An undriven gravity roller conveyor according to claim 1 or claim 2, wherein the rollers (28, 36) are disposed between adjacent pairs of the side walls (18), whereby n discrete channel members provide 2n-1 1 rows of rollers.

4. An undriven gravity roller conveyor according to any one of claims 1 to 3, wherein the spacing between successive slots (22, 58) along the free edge of each side wall (18) is substantially equal to the quotient of the sum of the exterior diameter of one of the rollers (28, 36) and the clearance between two successive rollers (28, 36) in a row divided by the number of rows.

5. An undriven gravity roller conveyor according to any one of claims 1 to 4, wherein the base (16) has a plurality of substantially parallel flange walls (24) extending along the length of the rows, the flange walls are connected together by an intermediate member (14) disposed between the flange walls (24), the channel members (12) are attached by the base walls (20) to the intermediate member (14) and the flange walls (24) extend away from the intermediate member (14) in a direction opposite to the disposition of the opposite side walls (18) of the channel members (12).

6. An undriven gravity roller conveyor according to any one of claims 1 to 5, wherein each of the rollers (38) comprises an element (40) providing a circumferential load-carrying surface; means for retaining the axle (30) disposed coaxially with respect to the load-carrying surface at the centre of the roller (28); and means connecting the retaining means to the element (40).

7. An undriven gravity roller conveyor according to claim 6, wherein the element (40) is formed of an elastomeric material.

8. An undriven gravity roller conveyor according to any one of claims 1 to 5, wherein each of the rollers comprises a central disc (38); a circumferential flange (40) encircling the disc (38) and forming a load-carrying surface; and a hub (42) formed at the centre of the disc (38) integral with the disc and the flange (40); each of the axles (44) has opposite ends extending from and axially beyond the hub (42); and a plurality of sleeves (46, 46') are insertable within the slots (22), the sleeves (46, 46') having axial bores (48) therein accommodating the axles (44) for rotation.

9. An undriven gravity roller conveyor according to claim 8, wherein aach sleeve (46, 46') has a tubular portion (50) with a first exterior cross-section dimension, a flange (52) forming one terminus of the tubular portion (50) with a second and greater cross-sectional dimension, the tubular portion (50) is receivable within the slots (22) and the flange (52) is positionable between the hub (42) and one of the side walls (18).

10. An undriven gravity roller conveyor according to claim 9, wherein the first cross-sectional dimension is greater than the width of the slots (22), whereby the tubular portion (50) is deformed when forced into one of the slots (22).

11. An undriven gravity roller conveyor according to claim 10, wherein the cross-sectional dimension of the axial bores (48) is greater than the diameter of the axles (44).

12. An undriven gravity roller conveyor according to claim 9, wherein each slot (58) has an entry region (60) adjoining the free edge of the side wall (18) with a width less than the first cross-sectional diemension and a retaining region (62) having a width approximately equal to the first cross-sectional dimension, whereby the entry region (60) prevents the sleeve (46, 46') from being inadvertently released from the retaining region (62).

13. An undriven gravity roller conveyor according to claim 8, wherein each roller (36) as a plurality of webs (66) disposed on the central disc (38) extending radially between the hub (42) and the circumferential flange (40).

14. An undriven gravity roller conveyor according to claim 13, wherein the webs (66) are disposed on both sides of the disc (38) and the webs disposed on one side of the disc are positioned between the webs disposed on the opposite side of the disc.

15. An undriven gravity roller conveyor according to any one of claims 1 to 14, wherein the depth of the slots (22) in first portions of the channel members (12) differs from the depth of the slots (22) in other portions of said channel members.

16. An undriven gravity roller conveyor according to any one of claims 1 to 15, wherein the slots in first portions of the channel members exhibit an equidistant spacing between successive ones of the slots (22) different from an equidistant spacing between successive ones of the slots in other portions of the channel members (12).

17. An undriven gravity roller conveyor according to any one of claims 1 to 16, wherein the width of the slots (22) in first portions of the channel members (12) differs from the width in other portions of the channel members (12).

18. An undriven gravity roller conveyor according to any one of claims 1 to 14, in which the slots (22) are substantially identical and equidistantly spaced on the side walls (12).

## Patentansprüche

1. Nicht angetriebener Schwerkraftrollenförderer mit:

einem Abschnitt, welcher eine Basis (16) sowie ein Mehrzahl von getrennten länglichen Kanalteilen (12) bereitstellt, welche sich von der Basis (16) seitlich voneinander beabstandet und parallel zueinander erstrecken und dabei eine Mehrzahl von Reihen bilden, wobei jedes der Kanalteile (12) einstückig mit diesem ausgebildete Seitenwände (18) hat, welche sich in Längsrichtung der Reihen erstrecken, sowie einen Boden (20), welcher die gegenüberliegenden Seitenwände (18) starr verbindet und in einer festen, voneinander beabstandeten Beziehung hält und wobei jede der gegenüberliegenden Seitenwände eine Mehrzahl von Schlitzen (22, 58) aufweist, welche in der freien Kante derselben ausgebildet sind und Rollen (28, 36) aufnehmen, die auf Achsen (30, 44) montiert sind,

dadurch gekennzeichnet, daß der Abstand zwischen den gegenüberliegenden Seitenwänden (18) gleich dem Abstand zwischen benachbarten Kanalteilen (12) ist, daß die Schlitze der Mehrzahl von Schlitzen (22, 58), welche in gegenüberliegenden Seitenwänden (18) ausgebildet sind, in parallelen Kolonnen mit entsprechenden Schlitzen (22, 58) in gegenüberliegenden Seitenwänden (18) benachbarter Kanalteile (12) ausgerichtet sind, daß die parallelen Kolonnen im wesentlichen senkrecht zu der Längserstreckung der Reihen verlaufen, daß die Schlitze (22, 58) offen sind und entlang der freien Kante jeder der gegenüberliegenden Seitenwände (18) jedes der Kanalteile (12) beabstandet sind, wobei der Abstand zwischen aufeinanderfolgenden Schlitzen weniger als die Hälfte des Durchmessers der Rollen (28, 36) innerhalb des Abschnittes beträgt,

daß die Achsen (30, 44) in den Schlitzen (22, 58) sowohl zwischen der Mehrzahl gegenüberliegender Seitenwände (18) der Kanalteile (12) als auch zwischen benachbarten Seitenwänden (18) benachbarter Paare von Kanalteilen (12) angeordnet sind, und

daß die Achsen (30, 44) der Rollen beliebiger benachbarter Reihen in verschiedenen Kolonnen angeordnet sind, wodurch der Abstand zwischen den Achsen (30, 44) der Rollen (28, 36) beliebiger benachbarter Reihen geringer sein kann als die Hälfte des Außendurchmessers der Rollen (28, 36).

2. Nicht angetriebener Schwerkraftrollenförderer nach Anspruch 1, wobei jede der Rollen (28, 36) auf einer anderen Achse (30, 44) montiert ist.

3. Nicht angetriebener Schwerkraftrollenförderer nach Anspruch 1 oder 2, wobei die Rollen (28, 36) zwischen benachbarten Paaren von Seitenwänden (18) angeordnet sind, wobei *n* verschiedene Kanalteile 2*n*-1 Reihen von Rollen bereitstellen.

4. Nicht angetriebener Schwerkraftrollenförderer nach einem der Ansprüche 1 bis 3, wobei der Abstand zwischen aufeinanderfolgenden Schlitzen (22, 58) entlang der freien Kante jeder Seitenwand (18) im wesentlichen gleich dem Quotienten der Summe aus dem äußeren Durchmesser einer der Rollen (28, 36) und dem Spielraum zwischen zwei aufeinanderfolgenden Rollen (28, 36) in einer Reihe, dividiert durch die Anzahl der Reihen ist.

5. Nicht angetriebener Schwerkraftrollenförderer nach einem der Ansprüche 1 bis 4, wobei die Basis (16) eine Mehrzahl von im wesentlichen parallelen Flanschwänden (24) hat, welche sich entlang der Länge der Reihen erstrecken, wobei die Flanschwände über ein Zwischenteil (14) miteinander verbunden sind, welches zwischen den Flanschwänden (24) angeordnet ist, und wobei die Kanalteile (12) über die Böden (20) an dem Zwischenteil (14) angebracht sind und die Flanschwände (24) sich von dem Zwischenteil (14) in einer Richtung weg erstrecken, welche der Anordnung der gegenüberliegenden Seitenwände (18) der Kanalteile (12) gegenüberliegt.

6. Nicht angetriebener Schwerkraftrollenförderer nach einem der Ansprüche 1 bis 5, wobei jede der Rollen (38) ein Element (40) aufweist, welches eine umlaufende, lastaufnehmende Oberfläche, Mittel, um die Achse (30) bezüglich der lasttragenden Oberfläche im Zentrum der Rolle (38) koaxial angeordnet zu halten und Mittel aufweist, welche die Haltemittel mit dem Element (40) verbinden.

7. Nicht angetriebener Schwerkraftrollenförderer nach Anspruch 6, wobei das Element aus einem elastomeren Material gebildet ist.

8. Nicht angetriebener Schwerkraftrollenförderer nach einem der Ansprüche 1 bis 5 wobei jede der Rollen eine zentrale Scheibe (38), einen umlaufenden Flansch (40), welcher die Scheibe (38) umgibt und eine lasttragende Oberfläche bildet, und eine Nabe (42) aufweist, welche im Zentrum der Scheibe (38) einstückig mit dieser und dem Flansch (40) ausgebildet ist, wobei jede der Achsen (44) gegenüberliegende Enden hat, welche sich von der Achse und in axialer Richtung jenseits der Nabe (42) erstrecken, und wobei eine Mehrzahl von Hülsen (46, 46') in die Schlitze (22) einzetzbar sind, wobei die Hülsen (46, 46') axiale Bohrungen (38) aufweisen, welche die Achsen (44) drehbar aufnehmen.

9. Nicht angetriebener Schwerkraftrollenförderer nach Anspruch 8, wobei jede Hülse (46, 46') einen rohrförmigen Abschnitt (50) mit einem ersten äußeren Querschnittsmäß hat, wobei ein Flansch (52) ein Ende des rohrförmigen Abschnittes (50) mit einem zweiten und größeren Querschnittsmaß bildet, und wobei der rohrförmige Abschnitt (50) in den Schlitzen (22) aufnehmbar is tund der Flansch (52) zwischen der Nabe (42) und einer der Seitenwände (18) anordbar ist.

10. Nicht angetriebener Schwerkraftrollenförderer nach Anspruch 9, wobei das erste Querschnittsmäß größer als die Breite der Schlitze (22) ist, wodurch der rohrförmige Abschnitt (50) verformt wird, wenn er gewaltsam in einen der Schlitze (22) gedrückt wird.

11. Nicht angetriebener Schwerkraftrollenförderer nach Anspruch 10, wobei das Querschnittsmaß der axialen Bohrungen (48) größer als der Durchmesser der Achsen (44) ist.

12. Nicht angetriebener Schwerkraftrollenförderer nach Anspruch 9, wobei jeder Schlitz (58) einen Einlaßbereich (60) hat, der sich an die freie Kante der Seitenwand (18) mit einer geringeren Breite als das erste Querschnittsmaß anschließt, und wobei ein Haltbereich (62) eine Breite hat, die näherungsweise gleich dem ersten Querschnittsmaß ist, wodurch der Einlaßbereich (60) verhindert, daß die Hülse (46, 46') vondem Haltebereich (62) unabsichtlich freigegeben wird.

13. Nicht angetriebener Schwerkraftrollenförderer nach Anspruch 8, wobei jede Rolle (36) eine Mehrzahl von Rippen (66) hat, welche auf der zentralen Scheibe (38) angeordnet sind und sich zwischen der Nabe (42) und dem Umfangsflansch (40) in radialer Richtung erstrecken.

14. Nicht angetriebener Schwerkraftrollenförderer nach Anspruch 13, wobei die Streben (66) auf beiden Seiten der Scheibe (38) angeordnet sind und wobei die Rippen, welche auf einer Seite der Scheibe angebracht sind, zwischen den Rippen angeordnet sind, welche auf der anderen Seite der Scheibe angebracht sind.

15. Nicht angetriebener Schwerkraftrollenförderer nach einem der Ansprüche 1 bis 14, wobei die Tiefe der Schlitze (22) in ersten Abschnitten der Kanalteile (12) sich von der Tiefe der Schlitze (22) in anderen Abschnitten der Kanalteile unterscheidet.

16. Nicht angetriebener Schwerkraftrollenförderer nach einem der Ansprüche 1 bis 15, wobei die Schlitze in ersten Abschnitten des Kanalteiles einen gleichmäßigen Abstand zwischen aufeinanderfolgenden Schlitzen (22) aufweisen, der sich von dem gleichmäßigen Abstand zwischen aufeinanderfolgenden Schlitzen in anderen Bereichen der Kanalteile (12) unterschiedet.

17. Nicht angetriebener Schwerkraftrollenförderer nach einem der Ansprüche 1 bis 16, wobei die Breite der Schlitze (22) in den ersten Abschnitten der Kanalteile (12) sich von der Breite in anderen Abschnitten der Kanalteile (12) unterschiedt.

18. Nicht angetriebener Schwerkraftrollenförderer nach der Ansprüche 1 bis 14, wobei die Schlitze (22) im wesentlichen identisch und auf den Seitenwänden (12) gleichmäßig beabstandet sind.

## Revendications

1. Transporteur à rouleaux par gravité non entraîné, comportant:
une section constituant une embase (16) et une pluralité de canaux allongés discrets (12) s'étendant depuis l'embase (16) parallèles, espacés latéralement les uns des autres, formant une pluralité de rangées, chacun des canaux (12) possédant, faisant corps avec lui, une pluralité de parois latérales opposées (18) s'étendant longitudinalement aux rangées et une paroi d'embase (20) réunissant de façon rigide et maintenant les parois latérales opposées (18) à un espacement fixe et chacune des parois latérales opposées possédant une pluralité de fentes (22, 58) pratiquées dans un bord libre de celle-ci et recevant des rouleaux (28, 36) montés sur des essieux (30, 44), caractérisé en ce que la séparation entre les parois latérales opposées (18) est égale à la séparation entre des canaux adjacents (12); les fentes de la pluralité de fentes (22, 58) pratiquées dans les parois latérales opposées (18) sont alignées en colonnes parallèles avec des fentes correspondantes (22, 58) dans les parois latérales opposées (18) de canaux adjacents (12), les colonnes parallèles étant sensiblement perpendiculaires à l'étendue longitudinale des rangées, les fentes (22, 58) étant ouvertes et espacées le long d'un bord libre de chacune des parois latérales opposées (18) de chacun des canaux (12), l'espacement entre des fentes successives étant inférieur à la moitié du diamètre des rouleaux (28, 36) à l'intérieur de la section;

les essieux (30, 44) étant disposés à l'intérieur des fentes (22, 58), à la fois entre la pluralité des parois latérales opposées (18) des canaux (12) et entre des parois latérales adjacentes (18) de paires adjacentes des canaux (12); et

les essieux (30, 44) des rouleaux dans deux rangées adjacentes quelconques pouvant être disposés dans des colonnes différentes, de telle sorte que la séparation entre les essieux (30, 44) des rouleaux (28, 36) dans deux rangées adjacentes quelconques puisse être inférieure à la moitié du diamètre extérieur des rouleaux (28, 36).

2. Transporteur à rouleaux par gravité non entraîné selon la revendication 1, dans lequel chacun des rouleaux (28, 36) est monté sur l'un des essieux différents (30, 44).

3. Transporteur à rouleaux par gravité non entraîné selon la revendication 1 ou la revendication 2, dans lequel les rouleaux (28, 36) sont disposés entre des paires adjacentes des parois latérales (18), *n* canaux discrets constituant deux *n*-1 rangées de rouleaux.

4. Transporteur à rouleaux par gravité non entraîné selon l'une quelconque des revendications 1 à 3, dans lequel l'espacement entre des fentes successives (22, 58) le long du bord libre de chaque paroi latérale (18) est sensiblement égal au quotient de la somme du diamètre extérieur d'un des rouleaux (28, 36) et de l'intervalle entre deux rouleaux successifs (28, 36) dans une rangée divisée par le nombre de rangées.

5. Transporteur à rouleaux par gravité non entraîné selon l'une quelconque des revendications 1 à 4, dans lequel l'embase (16) possède une pluralité de parois de flanc (24) sensiblement parallèles s'étendant le long des rangées, les parois de flanc étant réunies par l'élément intermédiaire (14) disposé entre les parois de flanc (24), les canaux (12) sont rattachés par les parois d'embase (20) à l'élément intermédiaire (14) et les parois de flanc (24) s'éloignent de l'élément intermédiaire (14) dans une direction opposée à la disposition des parois latérales opposées (18) des canaux (12).

6. Transporteur à rouleaux par gravité non entraîné selon l'une quelconque des revendications 1 à 5, dans lequel chacun des rouleaux (38) comporte un élément (40) constituant une surface circonférentielle de support de charge; des moyens en vue de retenir l'essieu (30) disposés coaxialement par rapport à la surface de support de charge au centre du rouleau (28); et des moyens reliant les moyens de retenue à l'élément (40).

7. Transporteur à rouleaux par gravité non entraîné selon la revendication 6, dans lequel l'élément (40) est constitué d'un matériau élastomère.

8. Transporteur à rouleaux par gravité non entraîné selon l'une quelconque des revendications 1 à 5, dans lequel chacun des rouleaux comporte un disque central (38); un rebord circonférentiel (40) entourant le disque (38) et constituant une surface de support de charge; et un moyeu (42) façonné au centre du disque (38) faisant corps avec le disque et le rebord (40); chacun des essieux (44) possédant des extrémités opposées s'étendant depuis et axialement au-delà du moyeu (42); et une pluralité de manchons (46, 46') pouvant être introduits à l'intérieur des fentes (22), les manchons (46, 46') possédant des alésages axiaux (48) recevant à rotation les essieux (44).

9. Transporteur à rouleaux par gravité non entraîné selon la revendication 8, dans lequel chaque manchon (46, 46') possède une partie tubulaire (50) avec une première dimension en coupe extérieure, un rebord (52) formant une extrémité de la partie tubulaire (50) avec une seconde dimension en coupe plus grande, la partie tubulaire (50) pouvant être reçue à l'intérieur des fentes (22) et le rebord (52) pouvant être disposé entre le moyeu (42) et une des parois latérale (18).

10. Transporteur à rouleaux par gravité non entraîné selon la revendication 9, dans lequel la première dimension en coupe est supérieure à la largeur des fentes (32), de telle sorte que la partie tubulaire (50) soit déformée lorsqu'elle est poussée dans l'une des fentes (22).

11. Transporteur à rouleaux par gravité non entraîné selon la revendication 10 dans lequel la dimension en coupe des alésages axiaux (48) est supérieure au diamètre des essieux (44).

12. Transporteur à rouleaux par selon la revendication 9, dans lequel chaque fente (58) possède une région d'entrée (60) adjacente au bord libre de la paroi latérale (18) avec une largeur inférieure à la première dimension en coupe et une région de retenue (62) possédant une largeur approximativement égale à la première dimension en coupe, de telle sorte que la région d'entrée (62) empêche le manchon (46, 46') d'être dégagé (62) par inadvertance de la region de retenue.

13. Transporteur à rouleaux par gravité non entraîné selon la revendication 8, dans lequel chaque rouleau (36) possède une pluralité de bras (66) disposés sur le disque central (38) s'étendant radialement entre le moyeu (42) et le rebord circonférentiel (40).

14. Transporteur à rouleaux par gravité non entraîné selon la revendication 13, dans lequel les bras (66) sont disposés sur les deux côtés du disque (38) et les bras disposés sur un côté du disque sont positionnés entre les bras disposés sur le côté opposé du disque.

15. Transporteur à rouleaux par gravité non entraîné selon l'une quelconque des revendications 1 à 14, dans lequel la profondeur des fentes (22) dans des premières parties des canaux (12) diffère de la profondeur (22) dans d'autres parties desdits canaux.

16. Transporteur à rouleaux par gravité non entraîné selon l'une quelconque des revendications 1 à 15, dans lequel les fentes dans des premières parties des canaux présentent un espacement équidistant entre des fentes successives (22) différent d'un espacement équidistant entre des fentes successives dans d'autres parties des canaux (12).

17. Transporteur à rouleaux par gravité non entraîné selon l'une quelconque des revendications 1 à 16, dans lequel la largeur des fentes (22) dans des premières parties des canaux (12) diffère de la largeur dans d'autres parties des canaux (12).

18. Transporteur à rouleaux par gravité non entraîné selon l'une quelconque des revendications 1 à 14, dans lequel les fentes (22) sont sensiblement identiques et espacées defaçon équidistante sur les parois latérales (12).

FIG. 1

FIG.2

FIG.3A

FIG.3B

EP 0 228 805 B1

...

FIG. 4

FIG. 5

FIG. 6A

FIG.6B

FIG. 7

FIG. 8

FIG.6C

6

# FIG. 9

FIG. 10

## FIG. II